# EUROPEAN PATENT APPLICATION

(11) **EP 3 038 234 A1**
(43) Date of publication of application: **29.06.2016**
(21) Application number: 15200703.5
(22) Date of filing: 17.12.2015
(51) Int. Cl.: H02K 3/34, H02K 3/52, H02K 15/10, H02K 15/14

(54) **SUPPORTER FOR STATOR**

(30) Priority: 24.12.2014 JP 2014260352
(71) Applicant: Toyota Jidosha Kabushiki Kaisha, Toyota-shi, Aichi-ken 471-8571 (JP)
(72) Inventor: MIZUTANI, Tetsushi, Toyota-shi, Aichi-ken,, 471-8571 (JP); ITO, Yuichiro, Toyota-shi, Aichi-ken,, 471-8571 (JP)
(74) Representative: Winter, Brandl, Fürniss, Hübner, Röss, Kaiser, Polte - Partnerschaft mbB

(57) **Abstract**

A supporter (20) for a stator is put on an axial end surface of a stator core (12) of a motor. The supporter (20) includes an outer annular portion (21), an inner annular portion (23), supporter teeth (25), a projection (28). The supporter teeth (25) are placed between the outer annular portion (21) and the inner annular portions (23). The supporter teeth (25) are extending radially around a rotation axis of the motor, and configured to connect the outer annular portion (21) to the inner annular portions (23). The projection (28) is provided on a radially outer peripheral surface of the outer annular portion (21) so as to project radially outwardly. The projection (28) is an axial thickness smaller than an axial thickness of the outer annular portion (21).

## Description

### BACKGROUND OF THE INVENTION

### 1. Field of the Invention

The present invention relates to a supporter for a stator to be put on an axial end surface of a stator core.

### 2. Description of Related Art

Conventionally, a stator coil is wound around stator teeth of a stator core constituting a rotary electric machine. Here, in order to improve workability of a winding operation of the stator coil to the stator teeth, a supporter made of resin may be put on an axial end surface of the stator core. This supporter is called a "cuff support."

Japanese Patent Application Publication No. 2007-312549 (JP 2007-312549 A) describes a rotary electric machine stator in which a stator cuff support is placed on an axial end surface of a stator core. The stator cuff support is configured to include an outer annular portion, an inner annular portion, and a plurality of cuff support teeth placed between the outer annular portion and the inner annular portion so as to connect them radially. The outer annular portion is placed to be put on a yoke of the stator core, and the plurality of cuff support teeth is placed to be put on their corresponding stator teeth.

In the configuration described in JP 2007-312549 A, a positioning projection projecting toward a slot between adjacent stator teeth is formed on a side face on a stator-core side of the inner annular portion of the stator cuff support. The positioning projection is fitted into an end portion of the slot. In such a configuration, the stator cuff support can be placed by being positioned relative to the stator core by use of the positioning projection. However, in order to increase a space factor of a stator coil in a stator and to prevent interference between the stator cuff support and a rotor, it is desired that a radial length of the inner annular portion of the stator cuff support be reduced. Accordingly, a radial length of that part of the inner annular portion in which the positioning projection is formed is decreased. In such a positioning structure, when a force is applied to the stator cuff support at the time of bending formation of the stator coil, a stress concentrates on the inner annular portion having a thin (small) width, which causes breakage. On that account, it is conceivable that a positioning projection is provided on the outer annular portion having a wide radial length (width) and provided on an outer peripheral side, but if the projection having an irregular shape is formed in the toric outer annular portion, distortion occurs at the time of the use.

### SUMMARY OF THE INVENTION

The present invention provides a supporter for a stator, which can restrain an occurrence of distortion at the time of the use with a configuration in which a positioning projection is provided in an outer annular portion.

A supporter related to the present invention is for a stator. The supporter is put on an axial end surface of a stator core of a motor. The supporter includes an outer annular portion, an inner annular portion, supporter teeth, and a projection. The supporter teeth are placed between the outer annular portion and the inner annular portion. The supporter teeth extend radially around a rotation axis of the motor. The supporter teeth are configured to connect the outer annular portion to the inner annular portion. The projection is provided on a radially outer peripheral surface of the outer annular portion so as to project radially outwardly. The projection has an axial thickness smaller than an axial thickness of the outer annular portion.

According to the above supporter, it is possible to restrain an occurrence of distortion at the time of the use with a configuration in which the positioning projection is provided in the outer annular portion.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a perspective view illustrating part, in a circumferential direction, of a rotary electric machine stator in which a stator cuff support according to an embodiment of the present invention is incorporated;
FIG. 2 is a view illustrating only part, in the circumferential direction, of the stator cuff support that is taken out from FIG. 1;
FIG. 3 is a perspective view of a part A in FIG. 2 when viewed from a diagonally upper side;
FIG. 4 is a sectional view taken along a line B-B in FIG. 2;
FIG. 5 is an enlarged view of a part C in FIG. 3;
FIG. 6 is a schematic perspective view illustrating a state where a stator cuff support is positioned and placed to be put on an axial end surface of a stator core by a jig;
FIG. 7 is a view corresponding to a D-D section of FIG. 2 in a state where the stator cuff support is placed on the axial end surface of the stator core and a stator coil is wound around stator teeth;
FIG. 8 is a view corresponding to FIG. 5 and illustrates another example of the stator cuff support;
FIG. 9 is a view illustrating one example of a stress distribution in a peripheral portion of the positioning projection in a case where a heat and cold cycle is repeated a predetermined number of times on the premise that a thickness of the positioning projection is equivalent to a thickness of the outer annular portion in the stator cuff support of the embodiment;
FIG. 10 is a view illustrating a relationship between a circumferential position of a cuff support tooth and a height from a lowermost end to an upper end of the stator cuff support at a corresponding circumferential position on the premise that the thickness of the positioning projection is equivalent to the thickness of the outer annular portion in the stator cuff support of the embodiment;
FIG. 11 is a view corresponding to FIG. 1 and illustrates a rotary electric machine stator in which a stator cuff support according to a comparative example is incorporated;
FIG. 12 is a view of the stator cuff support taken out from FIG. 11 and viewed from its upper side;
FIG. 13 is a view illustrating one example of a stress distribution in a peripheral portion of a positioning recessed portion in a case where a heat and cold cycle is repeated a predetermined number of times in the stator cuff support of the comparative example; and
FIG. 14 is a view illustrating a relationship between a circumferential position of a cuff support tooth and a height from a lowermost end to an upper end of the stator cuff support at a corresponding circumferential position in the stator cuff support of the comparative example.

### DETAILED DESCRIPTION OF EMBODIMENTS

An embodiment of the present invention is described below in detail with reference to the drawings. A shape, a material, a number, and the like to be described below are exemplifications for descriptions and can be changed appropriately according to the specification of a support for a stator or a rotary electric machine stator. In the following description, the same reference sign is assigned to a similar constituent. Note that a rotary electric machine stator in which a supporter for a stator is incorporated constitutes a rotary electric machine in combination with a rotor fixed to a rotating shaft. The rotary electric machine is used as a motor or a generator, or a motor generator having functions of both the motor and the generator.

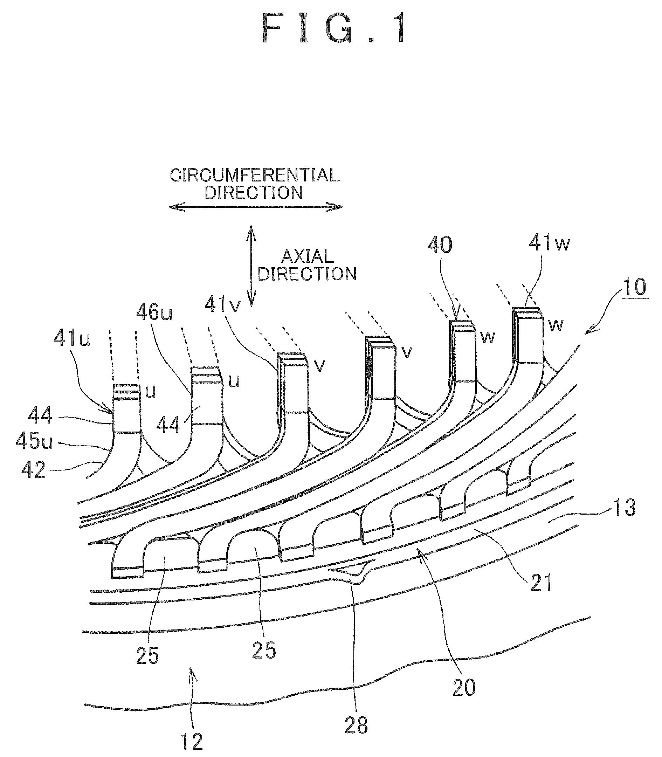

FIG. 1 is a perspective view illustrating part, in a circumferential direction, of a rotary electric machine stator 10 in which a stator cuff support 20 according to the present embodiment is incorporated. Hereinafter, the rotary electric machine stator 10 is just referred to as the stator 10. In the present embodiment, a supporter is called a stator cuff support.

The stator 10 includes a stator core 12, a stator cuff support 20, and a stator coil 40. The stator coil 40 is configured as an assembly of a U-phase coil 41u, a V-phase coil 41v, and a W-phase coil 41w.

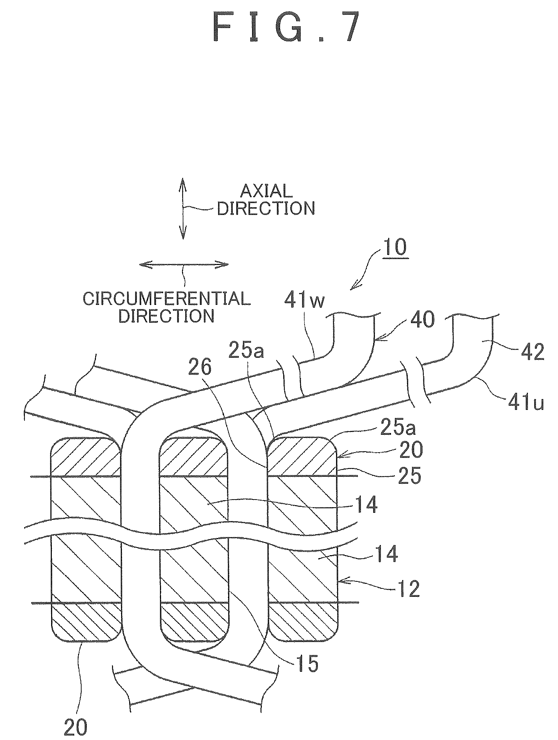

The stator core 12 is formed by axially laminating a plurality of electromagnetic steel sheets, which are magnetic materials. The stator core 12 includes a toric yoke 13 and a plurality of stator teeth 14 (FIG. 7) projecting radially inwardly from a plurality of circumferential positions on an inner peripheral surface of the yoke 13. The stator core 12 includes a plurality of slots 15 each formed between adjacent stator teeth 14

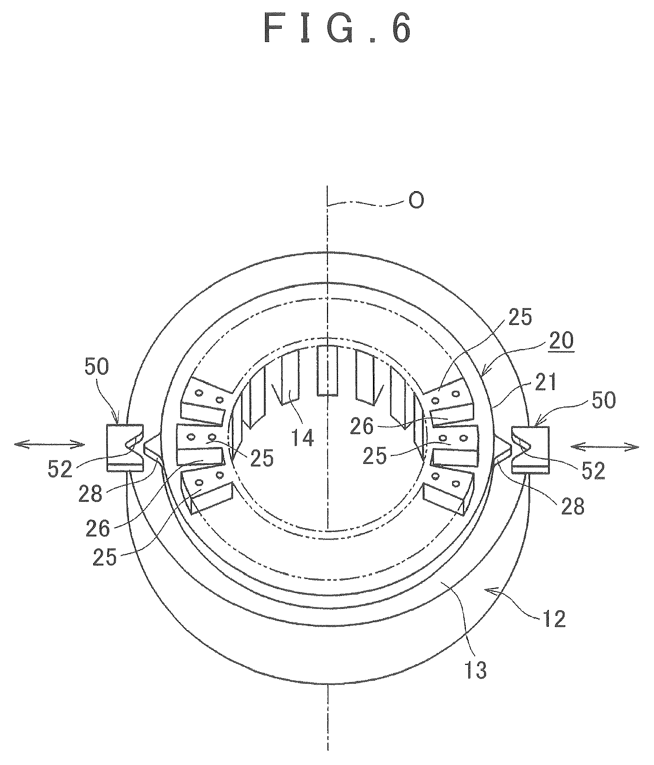

The stator core 12 may be formed by pressing a resin binder and a magnetic powder. Here, a "circumferential direction" indicates a circumferential direction around a central axis O (see FIG. 6) of the stator 10. Note that a "radial direction" indicates a radial direction that is perpendicular to the central axis O, and an "axial direction" indicates an axial direction of the stator 10.

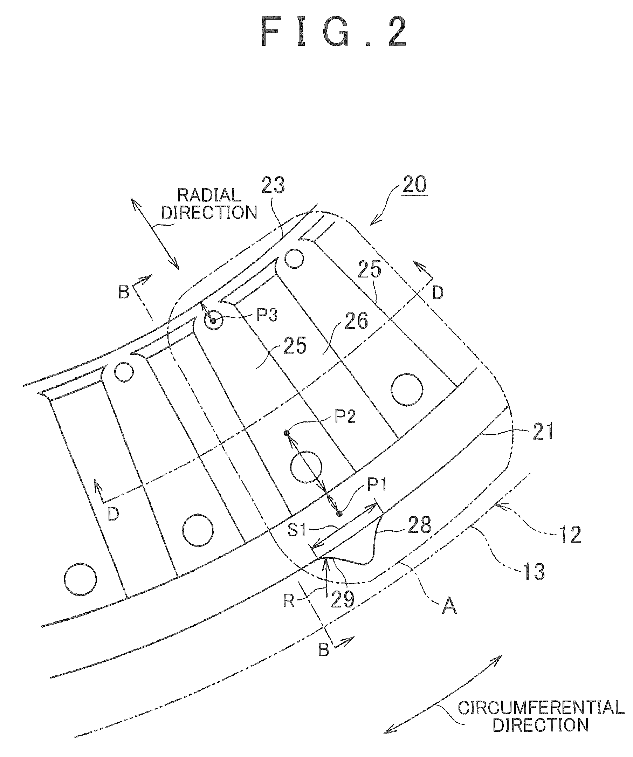

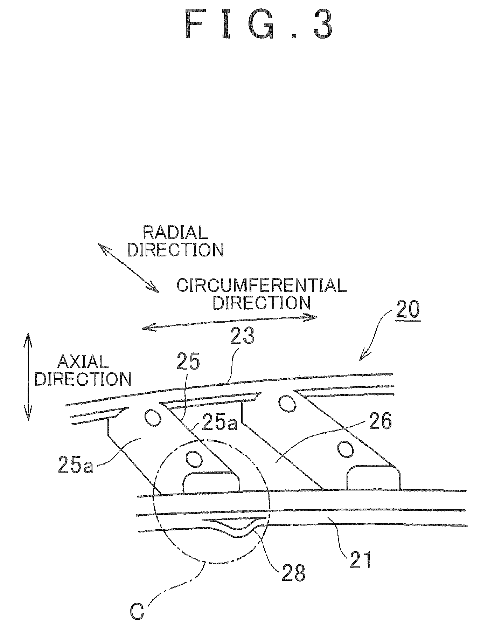

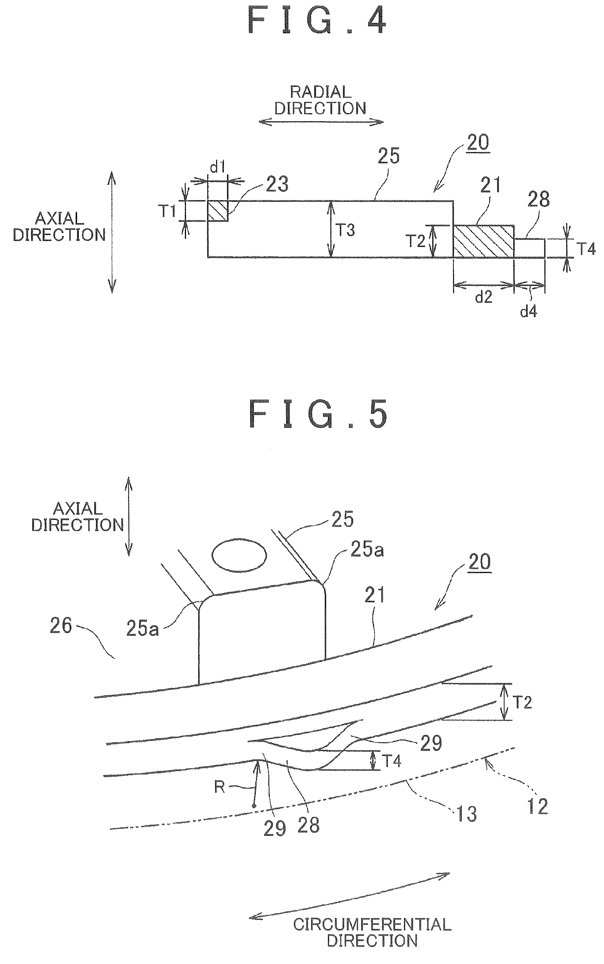

The stator cuff support 20 is placed to be put on one axial end surface (an upper end surface in FIG. 1) of the stator core 12. FIG. 2 is a view illustrating part, in the circumferential direction, of the stator cuff support 20 that is taken out from FIG. 1 and viewed from an upper side. FIG. 3 is a perspective view of a part A in FIG. 2 when viewed from a diagonally upper side. FIG. 4 is a sectional view taken along a line B-B in FIG. 2. FIG. 5 is an enlarged view of a part C in FIG. 3.

The stator cuff support 20 is used to assist a bending operation of conductor segments 42 (described later) constituting the stator coil 40. The stator cuff support 20 includes an outer annular portion 21, an inner annular portion 23, a plurality of cuff support teeth 25, and a positioning projection 28, which are formed integrally by injection molding of resin that is an insulation material.

The outer annular portion 21 has a toric plate shape, and is placed to be put on one axial end surface (an upper end surface in FIG. 1) of the yoke 13 of the stator core 12 at the time of the use. The inner annular portion 23 is formed in a toric shape, and is placed inside the outer annular portion 21 so that a central axis of the inner annular portion 23 accords with that of the outer annular portion 21. As illustrated in FIG. 4, an axial thickness T1 of the inner annular portion 23 is smaller than an axial thickness T2 of the outer annular portion 21 (T1 < T2). A radial length d1 of the inner annular portion 23 is smaller than a radial length d2 of the outer annular portion 21 (d1 < d2). The after-mentioned positioning projections 28 are formed at two places on a radially outer peripheral surface of the outer annular portion 21. Here, the thickness indicates an axial length.

The plurality of cuff support teeth 25 is placed radially between the outer annular portion 21 and the inner annular portion 23 so as to connect them. That part of a radially inner end portion of each of the cuff support teeth 25 which is placed on a side opposed to the stator core 12 extends to that side face of the inner annular portion 23 which is closer to a stator-core-12 side, and is connected to this side face. In each of the cuff support teeth 25, a bottom face on a stator-core-12 side is placed on each of the stator teeth 14 (FIG. 7) of the stator core 12, and the bottom face has a width equivalent to each of the stator teeth 14 in the circumferential direction. Further, a cuff support slot 26, which is a hole, is formed between adjacent cuff support teeth 25.

As illustrated in FIG. 4, an axial thickness T3 of each of the cuff support teeth 25 is larger than an axial thickness T2 of the outer annular portion 21 (T3 > T2). Bottom faces of the cuff support teeth 25 and the outer annular portion 21 are placed on a plane. Each of the cuff support teeth 25 is placed to be put on one axial end surface of a corresponding one of the plurality of stator teeth 14 (FIG. 7) of the stator core 12 such that the each of the cuff support teeth 25 extends in the radial direction to cover the one axial end surface. Chamfers 25a each having an arc section are formed in both circumferential ends of the outer peripheral surface of an axially outer end (an upper end in FIGS. 3 to 5) of each of the cuff support teeth 25.

The conductor segment 42 makes contact with the chamfer 25a of each of the cuff support teeth 25 so that the conductor segment 42 is bent, at the time of manufacturing the stator 10. The stator cuff support 20 configured as such regulates a position of a bent portion at the time of bending the conductor segment 42.

The positioning projections 28 are formed so as to project radially outwardly, at two positions that are axially symmetric with their phases being different by 180 degrees, on a radially outer peripheral surface of the outer annular portion 21 of the stator cuff support 20, as illustrated in FIG. 6. Hereby, two positioning projections 28 are formed at two positions distanced from each other at a regular interval in the circumferential direction on the radially outer peripheral surface of the outer annular portion 21.

Since the two positioning projections 28 have the same shape, the following mainly describes one positioning projection 28 out of the two positioning projections 28, with reference to FIGS. 1 to 5. When the stator cuff support 20 is viewed in the axial direction as illustrated in FIG. 2, a shape of the positioning projection 28 has a generally triangular mountain shape. As illustrated in FIG. 4, an axial thickness T4 of the positioning projection 28 is smaller than the axial thickness T2 of the outer annular portion 21 (T4 < T2). For example, the axial thickness T4 of the positioning projection 28 is not more than two-thirds of the axial thickness T2 of the outer annular portion 21, preferably not more than a half thereof. A bottom face of the positioning projection 28 is also placed on a plane as well as the bottom faces of the cuff support teeth 25 and the outer annular portion 21.

Further, when the stator cuff support 20 is viewed in the axial direction as illustrated in FIG. 2, a radially outer peripheral surface of the positioning projection 28 is smoothly continuous with the radially outer peripheral surface of the outer annular portion 21 via a curved-surface portion 29 having an arc section that is hollowed in a recessed shape. The curved-surface portion 29 has a curvature radius R. When the curvature radius R is made large, stress concentration on a continuous portion between the outer peripheral surface of the positioning projection 28 and the outer peripheral surface of the outer annular portion 21 can be relaxed.

FIG. 6 is a schematic perspective view illustrating a state where the stator cuff support 20 is positioned and placed to be put on the axial end surface of the stator core by a jig. Each of the positioning projections 28 is used for positioning by engaging the each of the positioning projections 28 with a recessed portion 52 of a locking jig 50 at the time when the stator cuff support 20 is positioned and placed to be put on the one axial surface of the stator core 12.

More specifically, in a case where the stator cuff support 20 is fixed to the stator core 12, the stator cuff support 20 is placed on an upper end surface of the stator core 12 in a state where the stator core 12 is supported by a support member (not shown) with an axial direction of the stator core 12 being set along an up-down direction as illustrated in FIG. 6. Then, two locking jigs 50 that are placed aside in advance radially outside the stator core 12 are moved radially inwardly from the radially outside. Each of the locking jigs 50 is provided as a part of a manufacturing apparatus for a rotary electric machine, and is also formed in a block shape. In each of the locking jigs 50, a recessed portion 52 having a V-shaped section is formed on a facing surface to the outer peripheral surface of the stator cuff support 20. Each of the locking jigs 50 moves radially inwardly while the recessed portion 52 of the each of the locking jigs 50 engages with its corresponding positioning projection 28, and presses the outer peripheral surface of the stator cuff support 20 from the radially outside so as to sandwich the outer peripheral surface of the stator cuff support 20. Hereby, the stator cuff support 20 is positioned and placed at a predetermined position. In this state, central axes of the stator cuff support 20 and the stator core 12 are aligned, and the stator cuff support 20 is positioned at a predetermined position in the circumferential direction.

Further, in a state where the stator cuff support 20 is positioned, the cuff support teeth 25 of the stator cuff support 20 are placed to be put on the stator teeth 14, and the outer annular portion 21 of the stator cuff support 20 is placed to be put on the yoke 13 of the stator core 12. Each of the locking jigs 50 is supported by a fixing part (not shown) that can move only in the radial direction of the stator core 12. Each of the locking jigs 50 is not limited to a block shape illustrated in FIG. 6, provided that the each of the locking jigs 50 has a recessed portion that engages with the positioning projection 28, and configurations having various shapes including a pillar shape can be employed.

When the positioning projections 28 are formed as described above, a strength of the positioning projections 28 can be increased as described later and an occurrence of distortion at the time of the use can be restrained.

Further, the stator coil 40 is wound around the stator teeth 14 in a state where the stator cuff support 20 is positioned on the stator core 12. FIG. 7 is a view corresponding to a D-D section of FIG. 2 in a state where the stator cuff support 20 is placed to be put on the axial end surface of the stator core 12 and the stator coil 40 is wound around the stator teeth 14. As illustrated in FIG. 7, the stator cuff support 20 may be also placed on the other axial end surface of the stator core 12 as well as the one axial end surface thereof. Positioning projections 28 are also formed in the stator cuff support 20 placed on the other axial end surface of the stator core 12.

The stator coil 40 is wound around the stator teeth 14 via the stator cuff support 20. When the stator coil 40 is formed, in a state where a plurality of U-shaped conductor segments 42 is arranged in the radial direction, the plurality of U-shaped conductor segments 42 is placed on an outer side relative to the other axial end (a bottom end in FIG. 7) of the stator core 12. FIG. 7 illustrates a state after the conductor segments 42 are bent to be changed from the U-shape. Each of the conductor segments 42 is configured such that a conductor element wire is coated with an insulation coating and both ends of the conductor element wire are exposed from the insulation coating. Then, linear leg portions of each of the conductor segments 42 are inserted into two slots 15 distanced from each other in the circumferential direction of stator core 12, from a lower side of the stator core 12 to an upper side thereof, and those parts of the leg portions which are projected from an upper end of the stator core 12 are bent in a direction inclined relative to the circumferential direction. At this time, the leg portion of the conductor segment 42 makes contact with the chamfer 25a of the cuff support tooth 25 of the stator cuff support 20 so that the leg portion of the conductor segment 42 is bent. Since the stator cuff support 20 is formed of resin, it is possible to prevent damage of the insulation coating even if the conductor segment 42 makes contact therewith.

Axial end portions 44 (see FIG. 1) extending in the axial direction are formed in tip ends of those parts of respective end portions of the leg portions of the conductor segment 42 which project upward from the one axial end surface of the stator core 12. The axial end portion 44 of the conductor segment 42 is put on an axial end portion 44 of another conductor segment 42 in the radial direction so as to be joined by welding. Hereby, one winding of a coil is formed to step over a plurality of stator teeth 14. This process is repeated so that those parts of axial end portions 44 of a plurality of conductor segments 42 arranged in the radial direction which are put on top of one another in the radial direction are joined to each other, and hereby, a coil element as one unit coil is formed. Then, coil elements placed to be wound at several places in the circumferential direction of the stator core 12 are connected to each other in an annular shape, thereby forming respective phase coils 41 u, 41 v, 41 w of U, V, W phases.

FIG. 1 illustrates a case where a U-phase first connected coil element 45u configured such that a plurality of coil elements is connected in an annular shape, and a U-phase second connected coil element 46u configured such that another plurality of coil elements is connected in an annular shape are formed. One end of the U-phase first connected coil element 45u is connected to one end of the U-phase second connected coil element 46u so as to form the U-phase coil 41u. The U-phase second connected coil element 46u is inserted into a slot 15 (see FIG. 7) shifted by one slot from the U-phase first connected coil element 45u toward one side in the circumferential direction (a right side in FIG. 1).

The V-phase coil 41v and the W-phase coil 41w are also formed in the same manner as the U-phase coil 41u. The U-phase coil 41u, the V-phase coil 41v, and the W-phase coil 41w are inserted into respective slots 15 shifted from each other in the circumferential direction of the stator core 12. Hereby, a three-phase stator coil 40 wound around the stator teeth 14 of the stator core 12 by distributed winding is formed.

Further, in a state where the stator coil 40 is wound around the stator teeth 14, the stator coil 40 is fixed to the stator core 12. At this time, by dropping varnish from an upper side of the stator core 12 and the stator coil 40, for example, the varnish is impregnated and solidified between the stator core 12 and the stator coil 40.

In this example, the stator coil 40 is wound around the stator teeth 14 by distributed winding, but may be wound around the stator teeth 14 by concentrated winding. Further, the positioning projection 28 may be formed only at one place of the radially outer peripheral surface of the stator cuff support 20, but from a viewpoint of increasing workability of a positioning operation, it is preferable to form the positioning projections 28 at two places or more on the outer peripheral surface of the stator cuff support 20. For example, the positioning projections 28 may be formed at three places or more distanced from each other at regular intervals along an outer periphery on the outer peripheral surface of the outer annular portion 21. When the positioning projections are formed at several positions distanced from each other at regular intervals in the circumferential direction on the outer peripheral surface of the radially outer annular portion so as to project outwardly, a force to be applied to the outer annular portion 21 is distributed generally equally in the circumferential direction. This makes it possible to distribute a stress of the outer annular portion 21 generally equally at several positions in the circumferential direction.

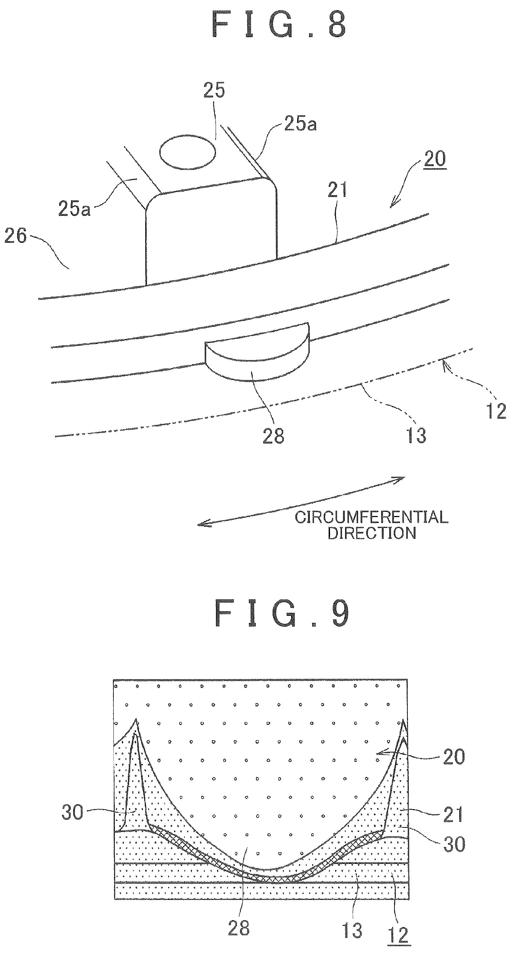

FIG. 8 is a view corresponding to FIG. 5 and illustrates another example of the stator cuff support 20. The positioning projection 28 illustrated in FIG. 5 has a generally triangular mountain shape, but may be configured to have a shape with an arc section like a positioning projection 28 of FIG. 8. The positioning projection 28 may be configured to have a shape other than the configurations illustrated in FIGS. 5, 8.

The stator cuff support 20 has such a configuration in which the positioning projection 28 for positioning relative to the stator core 12 is provided in the outer annular portion 21, thereby making it possible to restrain an occurrence of distortion at the time of the use. More specifically, the positioning projection 28 is formed in a projecting manner on the outer peripheral surface of the outer annular portion 21, and the thickness T4 of the positioning projection 28 is smaller than the thickness T2 of the outer annular portion 21. Hereby, it is possible to restrain an occurrence of distortion at the time of the use of the stator cuff support 20. More specifically, the stator cuff support 20 is formed by injection molding of resin inside a die. When the positioning projection 28 is formed in part, in the circumferential direction, of the stator cuff support 20, a radial length of the part, in the circumferential direction, of the stator cuff support 20 becomes large inside the die. Because of this, when a temperature is changed inside the die from a high temperature to a low temperature, a degree of solidification of the resin due to cooling is different in the part in the circumferential direction from the other parts. This may cause a so-called sink mark in which the resin largely shrinks in the part in the circumferential direction. Due to the sink mark, distortion occurs in the stator cuff support 20, thereby causing a curve on a lower side face, which may result in that a height from a lowermost end of the stator cuff support 20 to its upper end is largely different between an outer peripheral side and an inner peripheral side. In the present embodiment, since the thickness T4 of the positioning projection 28 is smaller than the thickness T2 of the outer annular portion 21, it is possible to restrain the occurrence of distortion, thereby restraining the occurrence of a curve. This makes it possible to improve flatness of the lower side face of the stator cuff support 20.

Further, since the positioning projection 28 is formed in a projecting manner on the outer peripheral surface of the outer annular portion 21, a circumferential length S1 (FIG. 2) and a radial length d4 (FIG. 4) of a part where the positioning projection 28 projects can be both increased relative to the outer peripheral surface of the outer annular portion 21. Further, a contact area between the locking jig 50 and the positioning projection 28 at an engagement portion can be increased. Hereby, at the time of bending formation or the like of the stator coil 40, even if a force is applied to the locking jig 50 from the positioning projection 28 in the circumferential direction, a connection strength of the positioning projection 28 relative to the outer annular portion 21 can be increased, thereby making it possible to increase a strength of the positioning projection 28 itself.

Further, differently from the above embodiment, in a case where the positioning projection is formed in the inner annular portion 23 having a small radial length, when a force is applied to the stator cuff support from the stator coil 40 at the time of bending formation of the stator coil 40, a stress may excessively concentrate on the inner annular portion 23. This may cause such a possibility that a necessary strength of the stator cuff support cannot be secured. In this regard, in the present embodiment, the positioning projection 28 is formed in the outer annular portion 21. The radial length d2 of the outer annular portion can be easily increased as compared with the radial length d1 of the inner annular portion 23. Accordingly, even in a case where a force is applied in the circumferential direction to the stator cuff support 20 from the stator coil 40 at the time of bending formation of the stator coil 40, a structure in which a necessary strength of the stator cuff support 20 can be secured can be easily realized.

Differently from a case where a positioning recessed portion is formed on the outer peripheral surface of the outer annular portion 21 instead of the positioning projection 28, it is possible to prevent a stress from being excessively concentrated on part of the stator cuff support 20.

Further, the outer peripheral surfaces of the positioning projection 28 and the outer annular portion 21 are smoothly continuous with each other via the curved-surface portion 29 having an arc section that is hollowed in a recessed shape, thereby making it possible to relax stress concentration on a connection portion between the outer annular portion 21 and the positioning projection 28.

FIG. 9 illustrates one example of stress distribution in a peripheral portion of the positioning projection 28 in a case where a heat and cold cycle is repeated a predetermined number of times on the premise that the thickness of the positioning projection 28 is equivalent to the thickness of the outer annular portion 21 in the stator cuff support 20 of the embodiment. A shape of the positioning projection 28 of FIG. 9 viewed in the axial direction is the same as the shape of the positioning projection 28 illustrated in FIG. 5. The "heat and cold cycle" indicates that a state where a temperature of the stator cuff support 20 is decreased to a predetermined low temperature and a state where the temperature of the stator cuff support 20 is increased to a predetermined high temperature are performed one by one sequentially. A stress distribution of the stator cuff support 20 after the heat and cold cycle was repeated a predetermined number of times was calculated by simulation. By repeating the heat and cold cycle, it is possible to simulatively realize an occurrence of the stress along with repetition of a temperature change due to start and stop of a rotary electric machine. In FIG. 9, the stress becomes highest at a part indicated by a diagonal lattice, and the stress becomes lowest at a part indicated by dispersed circles. A part indicated as a sandy area in FIG. 9 shows that the stress is intermediate.

As can be seen from FIG. 9, a region where the stress of the stator cuff support 20 became higher could be reduced with the configuration of FIG. 9. Further, a maximum value of the stress in the region where the stress became higher could be relatively lowered. Further, without rapid change of a shape of a recessed portion 30, which is a continuous portion between the outer peripheral surfaces of the positioning projection 28 and the outer annular portion 21, stress concentration on the recessed portion 30 could be relaxed. Also, similarly to the configuration in FIG. 9, even in a case of the embodiment illustrated in FIGS. 1 to 8, the shape of the outer annular portion 21 can be secured, and the outer peripheral surface of the outer annular portion 21 is not reduced by being scraped at part of the outer peripheral surface in the circumferential direction. Accordingly, a stress distribution of the embodiment illustrated in FIGS. 1 to 8 can be made equivalent to the stress distribution of the configuration of FIG. 9 or can be improved.

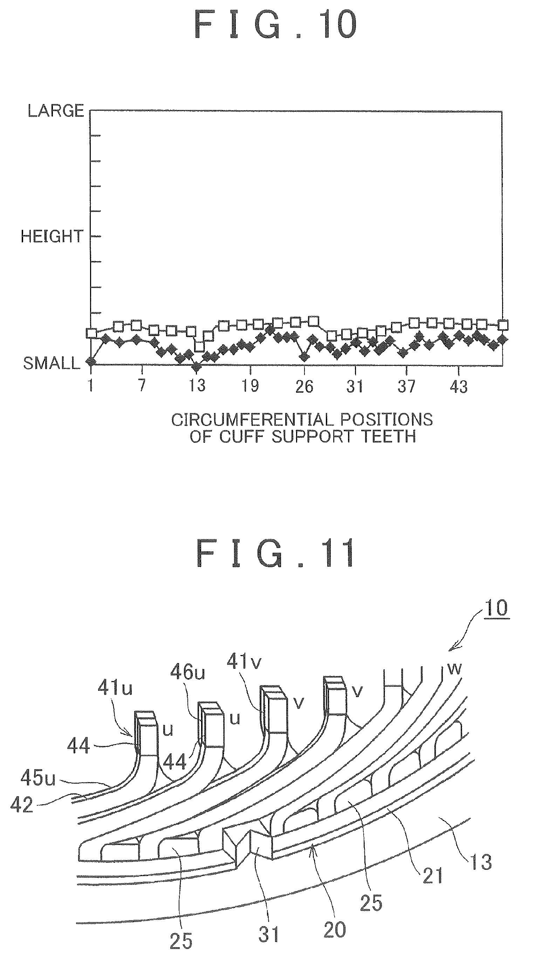

FIG. 10 illustrates a relationship between a circumferential position of a cuff support tooth 25 and a height from a lowermost end to an upper end of the stator cuff support 20 at a corresponding circumferential position on the premise that the thickness of the positioning projection 28 is equivalent to the thickness of the outer annular portion 21 in the stator cuff support 20 of the embodiment. An example illustrated in FIG. 10 also shows a case where the heat and cold cycle is repeated a predetermined number of times, similarly to the configuration illustrated in FIG. 9.

Further, in the example of FIG. 10, the stator cuff support 20 includes 48 cuff support teeth 25 and positions of the cuff support teeth 25 are prescribed by numbers from 1 to 48. Further, the positioning projections 28 are formed at four positions distanced from each other at regular intervals in the circumferential direction of the outer annular portion 21. A horizontal axis of FIG. 10 indicates the numbers of the cuff support teeth 25 as circumferential positions of the cuff support teeth 25. A vertical axis of FIG. 10 indicates a height from the lowermost end of the stator cuff support 20 to the upper end thereof at the same circumferential position as a corresponding cuff support tooth 25 in a state where the stator cuff support 20 is placed on a horizontal plane. That those values of the height are small as a whole indicates that flatness of a lower face of the stator cuff support 20 is high. Heights at two different positions of the stator cuff support 20 in the radial direction are shown. More specifically, as indicated by a point P1 in FIG. 2, a height, on a top face, at a radial position deviated outwardly from an inner peripheral end of the outer annular portion 21 just by a predetermined length is indicated by a black diamond shape in FIG. 10. Further, as indicated by a point P2 in FIG. 2, a height, on the top face, at a radial position deviated inwardly from a radially outer end of the cuff support tooth 25 just by a predetermined length is indicated by a blank square in FIG. 10. As indicated by a point P3 in FIG. 2, in the cuff support tooth 25, a height, on the top face, at a radial position deviated outwardly from a radial inner end of the inner annular portion 23 just by a predetermined length is almost the same as the case of the point P2 in FIG. 2 (the blank square in FIG. 10). From a simulation result of FIG. 10, it was confirmed that the height from the lowermost end could be made small regardless of the radial position of the stator cuff support 20.

Further, similarly to the configuration in FIG. 9, even in a case of the embodiment illustrated in FIGS. 1 to 8, the shape of the outer annular portion 21 can be secured, and the outer peripheral surface is not decreased by being scraped at part thereof in the circumferential direction. Hereby, in the stator cuff support 20 of the embodiment illustrated in FIGS. 1 to 8, the height from the lowermost end can be also made small regardless of the radial position of the stator cuff support 20, similarly to the result shown in FIG. 10.

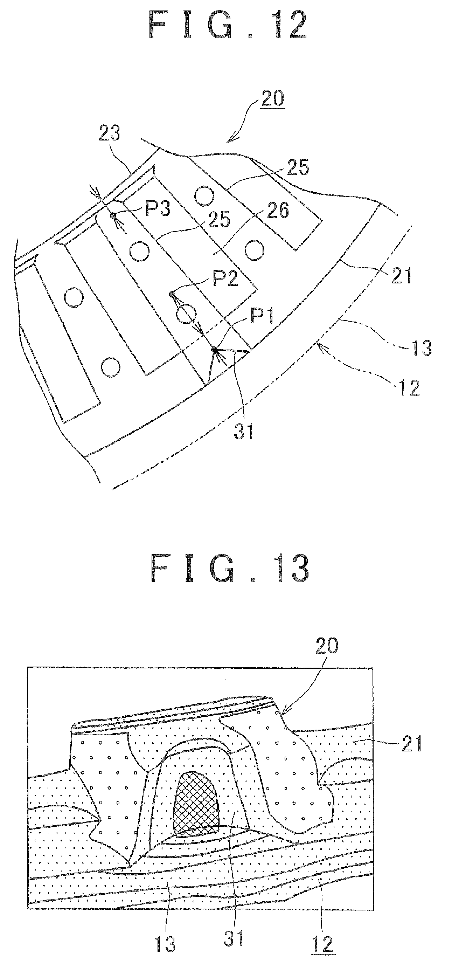

Next will be described a stator cuff support 20 of a comparative example with the use of FIGS. 11 to 14. FIG. 11 is a view corresponding to FIG. 1 and illustrates a rotary electric machine stator 10 in which a stator cuff support 20 according to a comparative example is incorporated. FIG. 12 is a view of the stator cuff support 20 taken out from FIG. 11 and viewed from its upper side.

In the comparative example shown in FIGS. 11, 12, a thickness of an outer annular portion 21 is increased at one position in a circumferential direction of the stator cuff support 20, so as to become the same as a thickness of a cuff support tooth 25 at the same position in the circumferential direction. A positioning recessed portion 31 is formed by forming a recessed portion having a V-shaped section on a radially outer face of that part of the outer annular portion 21 which has an increased thickness. The positioning recessed portion 31 also has a function to position the stator cuff support 20 relative to the stator core 12, similarly to the positioning projection 28 of the embodiment shown in FIGS. 1 to 6 and FIG. 8. In a case where the positioning recessed portion 31 of the comparative example is used, a positioning pin provided as a part of a manufacturing apparatus for a rotary electric machine is moved inwardly from a radially outside of the stator cuff support 20 so as to press the stator cuff support 20 from both sides while the positioning pin engages with the positioning recessed portion 31. Hereby, the stator cuff support 20 is positioned relative to the stator core 12, so that alignment and positioning in the circumferential direction are performed. Other configurations in the comparative example are the same as in the embodiment of FIGS. 1 to 6 and FIG. 8.

FIG. 13 illustrates one example of a stress distribution in a peripheral portion of the positioning recessed portion 31 in a case where a heat and cold cycle is repeated a predetermined number of times in the stator cuff support 20 of the comparative example. In FIG. 13, meanings of parts indicated by a diagonal lattice, a sandy area, dispersed circles are the same as the case of FIG. 9. As can be seen from FIG. 13, a stress became highest in a vicinity of a deep end of the positioning recessed portion 31 in the comparative example. Further, a maximum value of the stress in this part where the stress became highest was larger than the maximum value of the stress at the part indicated by the diagonal lattice in a case of the configuration of FIG. 9. Accordingly, in the comparative example, a thermal stress occurs due to repetition of the heat and cold cycle, so that a curve occurs in a bottom face of the stator cuff support 20 near the positioning recessed portion 31 and becomes breakable, thereby resulting in that durability may decrease. From the comparison between FIG. 9 and FIG. 13, in a case where the positioning recessed portion 31 is formed like the comparative example illustrated in FIG. 13, a range of the part where the stress becomes high is increased and the maximum value of the stress becomes higher as compared with a case where the positioning projection 28 is formed like the configuration illustrated in FIG. 9. On this account, it is understood that, in the embodiment, even in a case where the heat and cold cycle is repeated, a stress to be caused in the stator cuff support 20 can be lowered in comparison with the comparative example.

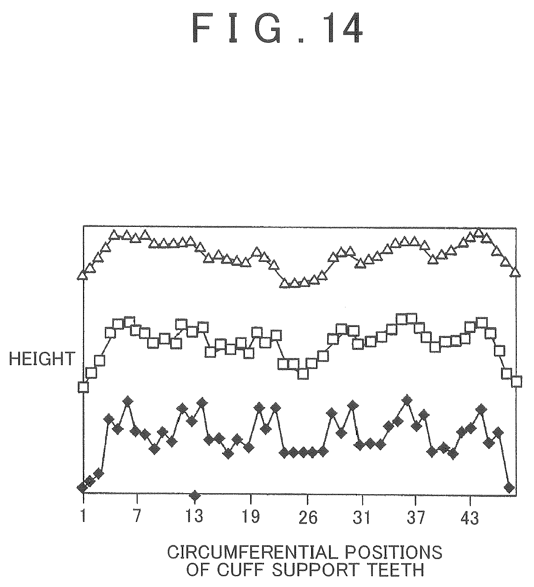

FIG. 14 illustrates a relationship between a circumferential position of a cuff support tooth 25 and a height from a lowermost end to an upper end of the stator cuff support 20 at a corresponding circumferential position on the premise that the heat and cool cycle is repeated a predetermined number of times in the stator cuff support 20 of the comparative example. In FIG. 14, a height at a position of a point P1 in FIG. 12 is indicated by a black diamond shape. Further, a height at a position of a point P2 in FIG. 12 is indicated by a blank square in FIG. 14. A height at a position of a point P3 in FIG. 12 is indicated by a blank triangle in FIG. 14. The other meanings in FIG. 14 are the same as in the case of FIG. 13. Note that "25" at the circumferential position of the cuff support tooth 25 in FIG. 14 indicates a formation position of the positioning recessed portion 31.

From the comparison between FIG. 14 and FIG. 12, a curve on a bottom face of the stator cuff support 20 became large in the comparative example, so that a height from the lowermost end to the upper end near a radially inner end was larger. On this account, it is understood that, even in a case where the heat and cold cycle is repeated in the embodiment, distortion of the stator cuff support 20 can be reduced and the curve can be also reduced in comparison with the comparative example.

## Claims

1. A supporter (20) for a stator, the supporter (20) put on an axial end surface of a stator core (12) of a motor, the supporter (20) **characterized by** comprising:
an outer annular portion (21);
an inner annular portion (23);
supporter teeth (25) placed between the outer annular portion (21) and the inner annular portion (23), the supporter teeth (25) extending radially around a rotation axis of the motor, the supporter teeth (25) being configured to connect the outer annular portion (21) to the inner annular portion (23); and
a projection (28) provided on a radially outer peripheral surface of the outer annular portion (21) so as to project radially outwardly, the projection (28) having an axial thickness smaller than an axial thickness of the outer annular portion (21).

2. The supporter (20) according to claim 1, wherein
a plurality of projections (28) is placed at regular intervals in a circumferential direction on the radially outer peripheral surface of the outer annular portion (21).

3. The supporter (20) according to claim 1 or 2, wherein
a radially outer peripheral surface of the projection (28) and the radially outer peripheral surface of the outer annular portion (21) are smoothly continuous with each other via a curved surface (29) having an hollowed arc shape.
